# EUROPEAN PATENT SPECIFICATION

(11) **EP 3 098 106 B1**
(45) Date of publication and mention of the grant of the patent: **31.01.2018**
(21) Application number: 16171401.9
(22) Date of filing: 25.05.2016
(51) Int. Cl.: B60K 17/28, B60K 6/48

(54) **MULTIMODAL HYBRID DRIVE SYSTEM FOR VEHICLES EQUIPPED WITH PTO AND HYBRID VEHICLE EQUIPPED WITH PTO COMPRISING SAID DRIVE SYSTEM**
MULTIMODALES HYBRIDES ANTRIEBSSYSTEM FÜR FAHRZEUGE MIT ZAPFWELLE UND HYBRIDFAHRZEUG MIT ZAPFWELLE MIT DIESEM ANTRIEBSSYSTEM
SYSTEME DE TRACTION HYBRIDE MULTIMODAL POUR VÉHICULES AVEC PRISE DE PUISSANCE ET VÉHICULE HYBRIDE COMPRENANT UNE PRISE DE PUISSANCE ET UN TEL SYSTEME DE TRACTION

(30) Priority: 26.05.2015 IT UB20150744
(43) Date of publication of application: 30.11.2016
(73) Proprietor: IVECO S.p.A., 10156 Torino (IT)
(72) Inventor: NICORA, Fabio, 31812-210 BELO HORIZONTE MINAS GERAIS (BR); MANTOVANI, Giorgio, 16148 GENOVA (IT); PEREIRA LEMOS, Jose Francivaldo, SETE LAGOAS MG (BR); BERNARDINI, Alessandro, 16123 GENOVA (IT)
(74) Representative: Franzolin, Luigi

(56) References cited:
- EP-A1- 2 620 311
- DE-A1-102011 116 935
- US-A- 2 850 920
- US-A1- 2003 100 395
- US-A1- 2011 042 155
- US-A1- 2014 034 405

## Description

### Field of the invention

The present invention relates to the field of hybrid drive systems for vehicles equipped with PTO and hybrid vehicles equipped with PTO comprising said drive system. In particular, the invention relates to the field of drive systems equipped with a torque distributor or transfer box.

### Prior art

Different kinds of hybrid drive systems for vehicles are known.

Most of them are intended for vehicles having four driving wheels, typically passenger cars.

An example of such systems is disclosed in US2850920. US2003/100395A discloses a hybrid drive system comprising a transmission with:
one input from an engine, two further inputs from respective electric motors, one output intended to be associated with a vehicle drive line , and one PTO. Almost all heavy vehicles or operating machines are equipped with a PTO, namely a Power Take Off that allows the operation of specific devices, the so-called auxiliaries or implements, in relation to the type of vehicle or operating machine.

For example, a refrigerator vehicle generally has a refrigeration circuit formed by a compressor operated through the vehicle PTO.

Therefore, heavy vehicles, namely those provided with a PTO, have different needs if compared with cars.

In particular, the power required by a heavy vehicle is quite different from the one required by a car, both with regard to the installed power, which generally corresponds to the maximum power for normal use, and with regard to the average operating power, generally a separated part of the average power, higher than the one of cars and very dependent on the operating conditions and modes.

The size and costs of an electric motor generator obviously increase with its nominal power. Therefore, housing a bulky electric motor generator in a heavy vehicle or in an operating machine is complex and expensive.

Another problem derives from the fact that some heavy vehicles or operating machines must be able to drive their implements or auxiliaries to a speed of rotation that may not be compatible with the speed of the vehicle or of the combustion engine.

If the operating machine or heavy vehicle is hybrid, this originates further problems.

### Summary of the invention

Therefore, an object of the present invention is simultaneously solving all the above problems by providing a multimodal hybrid drive system for vehicles equipped with PTO and hybrid vehicles equipped with PTO comprising said drive system.

The basic idea of the present invention is using two electric motor generators selectively connected to the driveline (transmission) in order to ensure a sufficient driving torque for moving heavy and large-sized vehicles for different operating configurations, which also allow uncoupling the PTO from the speed of the vehicle or machine, and which also allow the use of smaller motor generators, which are therefore produced in higher volumes and with lower total costs.

According to a preferred variant of the present invention, the used transfer box provides an input arranged on a first side and two further inputs and an output arranged on a second side opposite to the first.

This aspect is particularly advantageous both for those operating machines having no gearbox and for a possible elimination of the gearbox on vehicles such as buses or trucks. In fact, the transfer box may also be associated directly to the flywheel of the internal combustion engine or to a possible intermediate torque converter, thereby obtaining a space optimization beside the modularity of the application.

It is an object of the present invention a hybrid drive system for vehicles equipped with PTO according to claim 1. Another object of the present invention is a hybrid vehicle equipped with PTO comprising said drive system.

The dependent claims describe preferred embodiments of the invention, forming an integral part of the present description.

### Brief description of the figures

Further objects and advantages of the present invention will become clear from the detailed following description of an exemplary embodiment (and of its variants) and from the attached drawings, given to merely illustrative and not limitative purpose, in which:

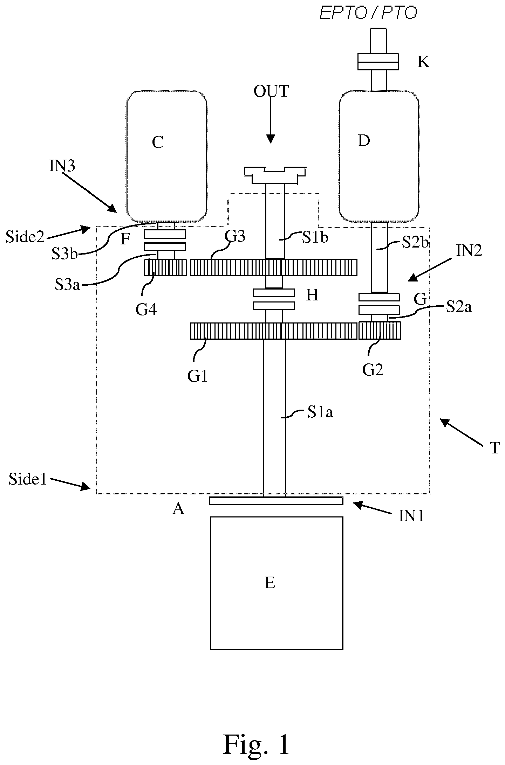

Figure 1 shows a diagram of the hardware of the drive system according to the present invention.

The same numbers and same reference letters in the figures identify the same elements or components.

In the present description, the term "second" component does not imply the presence of a "first" component. In fact, these terms are used only for clarity's sake and are not intended as limiting.

### Detailed description of embodiments

With reference to Figure 1, it is described a transfer box T having three parallel axes S1, S2 and S3 which define three independent inputs, respectively IN1, IN2 and IN3.

All axes are preferably formed by two adjacent and coaxial parts, S1a and S1b, S2a and S2b, S3a and S3b.

The first axis S1 comprises the S1a and S1b parts, wherein the first part S1a defines said input IN1 and the second part S1b, adjacent to the first part S1a, defines the only output OUT of the transfer box T.

On the first part S1a of the first axis S1 a first gear wheel G1 is splined, which engages a pinion G2 splined, in turn, on the first part S2a of the second axis S2.

The second part S2b of the second axis S2 is axially connected or defines the drive shaft of a first electric motor generator D.

The second side S1b of the first axis S1 is axially connected with the first part S1a through a controllable joint H.

On the second part S1b, a second gear wheel G3 is splined, which engages a second pinion G4 splined, in turn, on the first part S3a of the axis S3.

The second part S3b of the third axis S3 is axially connected or defines the drive shaft of a second electric motor generator C.

Each first part S1a, S2a, S3a of the axes S1, S2 and S3 is associated with a relative second part S1b, S2b, S3b by means of a controllable joint, respectively, H, G, F.

At least one of the two electric motor generators D or C has a through drive shaft, namely with both opposite ends accessible externally with regard to the stator of the motor generator, so that at the end opposite to the one connected with the respective controllable joint F or G, it includes a PTO connectable, if required, by means of a fourth controllable joint K.

Preferably, the PTO is arranged on the first electric motor generator D cooperating with the first part S1a of the first axis S1.

For convenience, hereinafter the motor or electric motor generator "related to PTO" means that motor generator which has one end of its drive shaft defining said PTO, while the other electric motor generator will be named "independent from PTO".

The present description clearly shows that on a first side Side1 of the transfer box T there is only one input IN1 intended to be associated to the internal combustion engine E of a vehicle or operating machine, while on the side Side2 opposite to Side 1 there are the other inputs IN2 and IN3 intended to be associated with the above-mentioned electric motor generators D and C, and the only output OUT of the transfer box T.

It is also clear that the transfer box provides a fixed transmission ratio between each of the inputs IN1, IN2, IN3 and the only output OUT.

Moreover, preferably, the first and the second wheel G1, G2 have an identical diameter, and the first and the second pinion G2 and G4 have an identical diameter, therefore the transmission ratios between the inputs IN2 and IN3, besides being fixed, are preferably identical too.

The drive system further comprises a processing unit that controls the internal combustion engine E, the electric motor generators D and C and the controllable joints H, G, F as well as the PTO joint K and possibly the main clutch A, which connects the internal combustion engine with the first input IN1 of the transfer box T.

The processing unit can control the above components to provide at least one of the following operating modes:
- ICE (Internal combustion engine): only the internal combustion engine is active for the vehicle drive,
- ZEV LOW (Zero Emission Vehicle): vehicle with zero emissions at low (LOW) power, so only one of the electric motor generators is active as a motor for the vehicle drive with zero environmental impact,
- ZEV HIGH: vehicle with zero emissions at high (HIGH) power, so both electric motor generators are active as motors for the vehicle drive with zero environmental impact, while the internal combustion engine E is deactivated,
- SERIAL HYBRID: hybrid series, wherein the second motor generator C provides, alone, the vehicle drive, operating as a motor, while said first electric motor generator, guided by the internal combustion engine, operates as a generator, powering said second electric motor,
- PARALLEL HYBRID LOW: parallel hybrid at low (LOW) power, wherein the internal combustion engine E and only one of the electric motors are connected to the driveline for the vehicle drive, while the other motor generator is deactivated,
- PARALLEL HYBRID HIGH: parallel hybrid at high (HIGH) power, wherein the internal combustion engine E and both electric motor generators operate as motors and are connected to the driveline for the vehicle drive,
- GENERATOR: electric generator, wherein the internal combustion engine guides in rotation one of the electric motor generators to produce electric energy, while the driveline is disconnected and the other motor generator is deactivated,
- ICE PTO: wherein the PTO is active for closing the relative controllable joint (K) and is guided only by the internal combustion engine by closing the relative controllable joint and said first (H) and second controllable joint (G), while the driveline can be either deactivated or activated by said second electric motor (C), regardless of the PTO operation,
- GENERATOR, ELECTRIC PTO: wherein the PTO is active and is guided by its first electric motor (D), while the driveline is operated by the internal combustion engine and, if necessary, the second electric motor generator is connected to the driveline to generate electric current.

Hereinafter Table N.1, summarizing the condition of the three engines E, C and D and of the vehicle driveline.

| MODE | E | C | D | DRIVELINE |
|---|---|---|---|---|
| ICE | ON | OFF | OFF | ON |
| ZEV LOW | OFF | M | OFF | ON |
| ZEV HIGH | OFF | M | M | ON |
| SERIAL HYBRID | ON | M | G | ON |
| PARALLEL HYBRID LOW | ON | M | OFF | ON |
| PARALLEL HYBRID HIGH | ON | M | M | ON |
| GENERATOR | ON | OFF | G | NOT |
| ICE PTO | ON | M/OFF | M/OFF | ON/OFF |
| GENERATOR ELECTRIC PTO | ON/OFF | M/OFF | M | ON/OFF |

For the internal combustion engine, the possible conditions are:
switched on (ON) or off (OFF).

For each of the electric motor generators, the possible conditions are:
active as a four-quadrant motor generator (M), active as generator (G), off (OFF).

For each of the controllable joints, the possible conditions are:
connected/closed (ON) disconnected/open (OFF).

The only output OUT is preferably permanently connected to the transmission shaft (not shown) connected to the drive deck, and therefore the activation of the driveline corresponds to the closing/connection (ON) of the first controllable joint H.

Hereinafter Control Table N.2, summarizing the condition of each of the components involved, according to each of the aforesaid operating modes:

| | E | C | D | A | H | G | F | K |
|---|---|---|---|---|---|---|---|---|
| ICE | ON | OFF | OFF | ON | ON | OFF | OFF | OFF |
| ZEV LOW | OFF | M | OFF | OFF | OFF | OFF | ON | OFF |
| ZEV HIGH | OFF | M | M | OFF | ON | ON | ON | OFF/ON |
| SERIAL HYBRID | ON | M | G | ON | OFF | ON | ON | OFF/ON |
| PARALLEL HYBRID LOW | ON | M | OFF | ON | ON | OFF | ON | OFF |
| PARALLEL HYBRID HIGH | ON | M | M | ON | ON | ON | ON | OFF/ON |
| GENERATOR | ON | OFF | G | ON | OFF | ON | OFF | ON/OFF |
| ICE PTO | ON | M/OFF | M/OFF | ON | ON/OFF | ON | ON/OFF | ON |

| | | | | | | | | |
|---|---|---|---|---|---|---|---|---|
| GENERATOR ELECTRIC PTO | ON/OFF | M/OFF | M | ON/OFF | ON/OFF | OFF | ON/OFF | ON |

It is clear that the ON/OFF conditions indicate possible irrelevant conditions. For example, in the operating mode "ELECTRIC GENERATOR PTO" the possibility according to which "*the other electric motor generator is possibly connected* to *the driveline to generate electrical current*" is expressed by means of the ON/OFF condition of the internal combustion engine E, of the second electric motor C and of the related joints A, H and F. Therefore, the activation of the internal combustion engine implies the closing of the joint A and the activation of the electric motor C implies the closing of the joint F. On the other hand, the activation of the electric motor generator D related to PTO does not necessarily mean the closing of the joint G, as it depends on the activated operating mode.

According to a preferred variant, the processing unit is configured for performing all the aforesaid operating modes.

According to a preferred variant, the transfer box T is connected, by means of its first input IN1, directly to the flywheel of the internal combustion engine E by means of the clutch A alone.

If necessary, the drive deck of the vehicle may be equipped with a gearbox with two or more ratios, housed in the same differential joint of the drive deck in which a transmission shaft connected to the only output of the transfer box enters and from which the transmission shafts of the single driving wheels emerge on opposite sides.

All the features of the independent claims of the patents EP2809539 (B1) or EP2620311 (B1) are incorporated herein as a reference.

According to another preferred variant of the present invention, which can be combined with the previous one, the transfer box T is indirectly connected, by means of its first input IN1, to the flywheel of the internal combustion engine E through a torque converter or a gearbox, or by means of a hydrostatic joint.

If the transfer box is directly connected to the flywheel of the internal combustion engine E, and the internal combustion engine is active, then the processing unit is configured to switch from the mode SERIAL HYBRID to PARALLEL HYBRID LOW or PARALLEL HYBRID HIGH, when a predefined speed or street load threshold is exceeded.

On the other hand, when the internal combustion engine is turned off, for example by passing through an area forbidden to fossil fuel powered vehicles, then the processing unit is configured to switch between the modes ZEV LOW and ZEV HIGH in relation to the torque required by the driver.

The present invention can be advantageously implemented through a computer program that comprises coding means for the implementation of one or more steps of the method, when this program is run on a computer. Therefore, it is intended that the scope of protection extends to said computer program and, furthermore, to computer-readable media that comprise a recorded message, said computer-readable media comprising program coding means for the implementation of one or more of the method steps, when said program is run on a computer.

Variants of the described non-limitative example are possible without departing from the scope of protection of the present invention, comprising all the equivalent embodiments for a person skilled in the art.

From the above description, the person skilled in the art can implement the present invention without introducing any further structural details. The elements and features shown in the various preferred embodiments, including the drawing, may be combined without leaving the scope of protection of the present application. What described in the paragraph related to the prior art is only necessary for a better understanding of the present invention, and is not a declaration of the existence of what has been described. Furthermore, unless specifically excluded in the detailed description, what described in the paragraph related to the prior art can be considered in combination with the features of the present invention, thus forming an integral part of the present invention. None of the characteristics of the different variants is essential, and therefore the individual characteristics of each preferred or variant or drawing can be combined individually with the other described variants.

## Claims

1. Hybrid drive system for vehicles equipped with PTO, the system comprising
- an internal combustion engine (E),
- a first electric motor generator (D) and a second electric motor generator (C), wherein at least said first motor generator has a drive shaft having opposite ends, both accessible, wherein one of said ends defines a PTO which can be activated by means of a relative controllable joint (K),
- a transfer box (T) comprising
• three selectively connectable inputs (IN1, IN2, IN3) and one single output (OUT) intended to be associated with a vehicle driveline, wherein a first input (IN1) is intended to be associated with said internal combustion engine (E) by means of a relative controllable joint (A), a second input (IN2) is intended to be associated with said first electric motor generator (D) by means of a respective free end of a respective drive shaft and said third input (IN3) is intended to be associated with said second electric motor generator (C) by means of a respective free end of a respective drive shaft,
• a fixed transmission ratio between each of said inputs (IN1, IN2, IN3) and said single output (OUT).

2. A system according to claim 1, wherein said transfer box comprises three parallel axes (S1, S2, S3) which define the first (IN1), second (IN2) and third (IN3) of said three selectively connectable inputs, and wherein each of said three axes (S1, S2, S3) is formed by a respectively adjacent and coaxial first part (Sla, S2a, S3a) and second part (S1b, S2b, S3b).

3. A system according to claim 2, wherein said first axis (S1) comprises a first part (Sla) and a second part (S1b), wherein the first part (Sla) defines said first input (IN1) and the second part (S1b) defines said single output (OUT) of the transfer box (T).

4. A system according to claim 3, wherein, on said first part (Sla) of the first axis (S1), a first gear wheel (G1) is splined, which engages a pinion (G2) splined, in turn, on the first part (S2a) of the second axis (S2) of said three axes (S1, S2, S3) and wherein, on said second part (S1b) of the first axis (S1), a second gear wheel (G3) is splined which engages a second pinion (G4) splined, in turn, on the first part (S3a) of the third axis (S3) of said three axes (S1, S2, S3).

5. A system according to claim 4, wherein each first part (Sla, S2a, S3a) of said first (S1), second (S2) and third axis (S3) is associated with a relative second part (S1b, S2b, S3b) by means of a respective first (H), second (G) and third controllable joint (F) and/or wherein a second part (S2b, S3b) of said second (S2) or third axis (S3) is axially connected or defines said drive shaft of said first (D) or second electric motor generator (C).

6. A system according to any one of the preceding claims, wherein said transfer box (T) defines two opposite sides (Side1, Side2) and wherein said first input (IN1) is accessible from a first side (Side1) of said two opposite sides and said second and third inputs and said single output are accessible from a second side (Side2) of said two opposite sides.

7. A system according to claim 5, further comprising processing means configured to control said internal combustion engine (E), said first (D) and second electric motor generator (C) and said controllable joints (A, H, G, F, K) in order to provide at least one of the following operating modes:
- First operating mode (ICE): only said internal combustion engine is active for the vehicle drive, while the electric motor generators (D, C) are deactivated and the respective joints (G, F) are open (OFF),
- Second operating mode (ZEV LOW): wherein only said second electric motor generator (C) is active as a motor for the vehicle drive with zero environmental impact, while the internal combustion engine and the other electric motor generator are deactivated and the respective controllable joints (A, H, G) are open, so that only said second electric motor generator (C) is connected to the driveline,
- Third operating mode (ZEV HIGH): wherein both the electric motor generators are active as motors for the vehicle drive with zero environmental impact, while the internal combustion engine is deactivated and a relative controllable joint (A) is open,
- Fourth operating mode (SERIAL HYBRID): wherein said second motor generator (C) provides, alone, the vehicle drive, operating as a motor, while said first motor generator (D), guided by the internal combustion engine, operates as a generator, powering said second electric motor,
- Fifth operating mode (PARALLEL HYBRID LOW): wherein the internal combustion engine E and only one (C) of the electric motors are connected to the driveline for the vehicle drive, while the other motor generator (D) is deactivated,
- Sixth operating mode (PARALLEL HYBRID HIGH): wherein the internal combustion engine E and both electric motor generators operate as motors and are connected to the driveline for the vehicle drive,
- Seventh operating mode (GENERATOR): wherein the internal combustion engine guides in rotation one of the electric motor generators (D) to produce electric energy, while the driveline is disconnected and the other motor generator (C) is deactivated,
- Eighth operating mode (ICE PTO): wherein the PTO is active for closing the relative controllable joint (K) and is guided only by the internal combustion engine by closing the relative controllable joint and said first (H) and second controllable joint (G), while the driveline can be either deactivated or activated by said second electric motor (C), regardless of the PTO operation,
- Ninth operating mode (GENERATOR, ELECTRIC PTO): wherein the PTO is active and is guided by the relative first electric motor (D), while the driveline is operated by the internal combustion engine and, if necessary, the second electric motor generator is connected to the driveline to generate electric current.

8. A system according to claim 7, wherein said processing unit is configured to provide all the above-mentioned operating modes.

9. A system according to any one of claims 7 or 8, wherein when said transfer box (T) is directly connected to the flywheel of the internal combustion engine (E) and the internal combustion engine is active, then said processing unit is configured to switch from said fourth operating mode (SERIAL HYBRID) to said fifth (PARALLEL HYBRID LOW) or said sixth operating mode (PARALLEL HYBRID HIGH) when a predefined speed threshold is exceeded.

10. A system according to any one of claims 7-9, wherein when said transfer box (T) is directly connected to the flywheel of the internal combustion engine (E) and the internal combustion engine is deactivated, then said processing unit is configured to switch between said second (ZEV LOW) and said third operating mode (ZEV HIGH) depending on the torque required by the driver.

11. A system according to any one of claims 7-10, wherein said processing unit is configured to actuate said operating modes according to Control Table No.2, wherein the label
- ICE corresponds to said first operating mode,
- ZEV LOW corresponds to said second operating mode,
- ZEV HIGH corresponds to said third operating mode,
- SERIAL HYBRID corresponds to said fourth operating mode,
- PARALLEL HYBRID LOW corresponds to said fifth operating mode,
- PARALLEL HYBRID HIGH corresponds to said sixth operating mode,
- GENERATOR corresponds to said seventh operating mode,
- ICE PTO corresponds to said eighth operating mode,
- GENERATOR ELECTRIC PTO corresponds to said ninth operating mode,
and wherein
E corresponds to said internal combustion engine,
C corresponds to said first electric motor generator,
D corresponds to said second electric motor generator,
A corresponds to said controllable joint connecting said internal combustion engine to said first input (IN1) of the transfer box,
H or G or F corresponds to said first or second or third controllable joint connecting said first (Sla) and said second part (S1b) of said first (S1) or second (S2) or third axis (Se),
K corresponds to a controllable joint to activate said vehicle PTO,
and wherein M indicates a motor operation of one of said electric motor generators, G indicates a generator operation of one of said electric motor generators, ON corresponds to a state of activation of said internal combustion engine or of connection of one of said controllable joints and OFF corresponds to a state of deactivation of said internal combustion engine or of disconnection of one of said controllable joints A, H, G, F, K and wherein an ON/OFF condition should be considered irrelevant.

12. A system according to any one of claims 9-11, wherein said single output of the transfer box is connected to a vehicle drive axis, and wherein a differential of said drive axis is equipped with a gear with at least two speed ratios integrated in the same casing of the differential.

13. A vehicle or operating machine equipped with PTO and comprising a hybrid drive system according to any one of claims 1-12.

14. A control method for a hybrid drive system for vehicles equipped with PTO according to claim 11, comprising a step of controlling said
- internal combustion engine E,
- first electric motor generator D and second electric motor generator C
- controllable joints A, H, G, F, K
according to the Control Table No. 2.

## Patentansprüche

1. Hybridantriebssystem für Fahrzeuge mit einer Zapfwelle, umfassend:
- einen inneren Verbrennungsmotor (E),
- einen ersten Elektromotor-Generator (D) und einen zweiten Elektromotor-Generator (C), wobei zumindest der erste Motorgenerator eine Antriebswelle mit zwei gegenüberliegenden Enden aufweist, die beide zugänglich sind, wobei eines dieser Enden eine Zapfwelle definiert, welche durch eine relativ steuerbare Kupplung (K) aktiviert werden kann,
- ein Verteiler (T), umfassend:
• drei selektiv verbindbare Eingänge (IN1, IN2, IN3) und einen einzigen Ausgang (OUT) zur Verbindung mit einem Fahrzeug-Antriebszug, wobei ein erster Eingang (IN1) zur Zuordnung zum ersten Verbrennungsmotor (E) mittels einer relativ steuerbaren Kupplung (A) vorgesehen ist, ein zweiter Eingang (IN2) zur Zuordnung zu dem ersten Elektromotor-Generator (D) mittels eines jeweils freien Endes einer jeweiligen Antriebswelle vorgesehen ist und der dritte Eingang (IN3) zur Zuordnung zu dem zweiten Elektromotor-Generator (C) mittels eines jeweils freien Endes einer jeweiligen Antriebswelle vorgesehen ist,
• ein festes Übertragungsverhältnis zwischen jedem der Eingänge (IN1, IN2, IN3) und dem einzigen Ausgang (OUT).

2. System gemäß Anspruch 1, bei welchem das Verteilergetriebe drei parallele Achsen (S1, S2, S3) umfasst, welche die ersten (IN1), zweiten (IN2) und dritten (IN3) der drei selektiv verbindbaren Eingänge definieren, wobei jede der drei Achsen (S1, S2, S3) gebildet wird durch einen jeweils benachbarten und koaxialen ersten Teil (Sla, S2a, S3a) und zweiten Teil (S1b, S2b, S3b).

3. System gemäß Anspruch 2, bei welchem die erste Achse (S1) einen ersten Teil (Sla) und einen zweiten Teil (S1b) umfasst, wobei der erste Teil (Sla) den ersten Eingang (IN1) definiert und der zweite Teil (S1b) den einzigen Ausgang (OUT) des Verteilergetriebes definiert.

4. System gemäß Anspruch 3, bei welchem auf den ersten Teil (Sla) der ersten Achse (S1) ein erstes Zahnrad (G1) aufgekeilt ist, welches ein Ritzel (G2) kämmt, welches wiederum auf den ersten Teil (S2a) der zweiten Achse (S2) der drei Achsen (S1, S2, S3) aufgekeilt ist, und wobei auf den zweiten Teil (S1b) der ersten Achse (S1) ein zweites Zahnrad (G3) aufgekeilt ist, welches ein zweites Ritzel (G4) kämmt, welches wiederum auch den dritten Teil (S3a) der dritten Achse (S3) der drei Achsen (S1, S2, S3) aufgekeilt ist.

5. System gemäß Anspruch 4, bei welchem jeder erste Teil (Sla, S2a, S3a) der ersten (S1), zweiten (S2) und dritten Achse (S3) einen jeweils zweiten Teil (S1b, S2b, S3b) mittels einer jeweiligen ersten (H), zweiten (G) und dritten steuerbaren Kupplung (F) zugeordnet ist und/oder ein zweiter Teil (S2b, S3b) der zweiten (S2) oder dritten Achse (S3) axial mit der Antriebswelle des ersten (D) oder zweiten Elektromotor-Generators (C) verbunden ist oder diese definiert.

6. System gemäß einem der vorhergehenden Ansprüche, bei welchem das Verteilergetriebe (T) zwei gegenüberliegende Seiten (Side1, Side2) definiert und wobei der erste Eingang (IN1) von einer ersten Seite (Side1) der zwei gegenüberliegenden Seiten her zugänglich ist und zweite und dritte Eingänge und der einzige Ausgang von einer zweiten Seite (Side2) der zweiten gegenüberliegenden Seiten her zugänglich ist.

7. System gemäß Anspruch 5, ferner umfassend Verarbeitungsmittel, ausgebildet zur Steuerung des inneren Verbrennungsmotors (E) des ersten (D) und des zweiten Elektromotor-Generators (C) und der steuerbaren Kupplung (A, H, G, F, K) zur Schaffung zumindest einen der folgenden Betriebszustände:
- erster Betriebszustand (ICE): lediglich der innere Verbrennungsmotor ist für den Fahrzeugantrieb aktiviert, während die Elektromotor-Generatoren (D, C) deaktiviert sind und die jeweiligen Kupplungen (G, F) offen sind (OFF),
- zweiter Betriebszustand (ZEV LOW): in welchem lediglich der zweite Elektromotor-Generator (C) als ein Motor für den Fahrzeugantrieb ohne jeden Umwelteinfluss aktiviert ist, während der innere Verbrennungsmotor und der andere Elektromotor-Generator deaktiviert sind und die jeweiligen steuerbaren Kupplungen (A, H, G) offen sind, so dass lediglich der zweite Elektromotor-Generator (C) mit dem Antriebszug verbunden ist,
- dritter Betriebszustand (ZEV HIGH): in welchem beide Elektromotor-Generatoren als Motoren für den Fahrzeugantrieb ohne jeden Umwelteinfluss aktiviert sind, während der innere Verbrennungsmotor deaktiviert ist und eine jeweilige steuerbare Kupplung (A) offen ist,
- vierter Betriebszustand (SERIAL HYBRID): wobei der zweite Elektromotor-Generator (C) allein für den Fahrzeugantrieb sorgt und als Motor arbeitet, während der erste Elektomotor-Generator (G), betrieben vom inneren Verbrennungsmotor, als ein Generator arbeitet und den zweiten Elektromotor antreibt,
- fünfter Betriebszustand (PARALLEL HYBRID LOW): bei welchem der innere Verbrennungsmotor (E) und lediglich einer (C) der Elektromotoren mit dem Antriebszug für den Fahrzeugantrieb verbunden sind, während der andere Motorgenerator (D) deaktiviert ist,
- sechster Betriebszustand (PARALLEL HYBRID HIGH): bei welchem der innere Verbrennungsmotor (E) und beide Elektromotor-Generatoren als Motoren bearbeiten und mit dem Antriebszug für den Fahrzeugantrieb verbunden sind,
- siebter Betriebszustand (GENERATOR): bei welchem der innere Verbrennungsmotor in Drehung einen der Elektromotor-Generatoren (D) zur Erzeugung elektrischer Energie antreibt, während der Antriebszug entkoppelt ist und der andere Motorgenerator (C) deaktiviert ist,
- achter Betriebszustand (ICE PTO): bei welchem die Zapfwelle zum Schließen der relativen steuerbaren Kupplung (K) aktiviert ist und lediglich von dem inneren Verbrennungsmotor durch Schließen der relativen steuerbaren Kupplung und der ersten (H) und zweiten steuerbaren Kupplung (E) angetrieben wird, wobei der Antriebszug entweder deaktiviert sein kann oder durch den zweiten Elektromotor (C) unabhängig von dem Betrieb der Zapfwelle aktiviert sein kann,
- neunter Betriebszustand (GENERATOR, ELECTRIC PTO): bei welchem die Zapfwelle aktiviert ist und durch den jeweiligen ersten Elektromotor (D) angetrieben wird, wobei der Antriebszug durch den inneren Verbrennungsmotor angetrieben wird und, falls erforderlich, der zweite Elektromotor-Generator mit dem Antriebszug zur Erzeugung von elektrischem Strom verbunden ist.

8. System gemäß Anspruch 7, bei welchem die Verarbeitungseinheit dazu ausgebildet ist, alle vorstehend beschriebenen Betriebszustände herzustellen.

9. System gemäß einer der Ansprüche 7 oder 8, bei welchem dann, wenn das Verteilergetriebe (T) unmittelbar mit dem Schwungrad des inneren Verbrennungsmotors (E) verbunden ist und der innere Verbrennungsmotor aktiv ist, die Verarbeitungseinheit dazu ausgebildet ist, von dem vierten Betriebszustand (SERIAL HYBRID) zu dem fünften (PARALLEL HYBRID LOW) oder sechsten Betriebszustand (PARALLEL HYBRID HIGH) zu schalten, wenn eine vorbestimmte Geschwindigkeitsschwelle überschritten ist.

10. System gemäß einem der Ansprüche 7 bis 9, bei welchem dann, wenn das Verteilergetriebe (T) unmittelbar mit dem Schwungrad des inneren Verbrennungsmotors (E) verbunden ist und der innere Verbrennungsmotor (D) aktiviert ist, die Verarbeitungseinheit dazu ausgebildet ist, zwischen dem zweiten Betriebszustand (ZEV LOW) und dem dritten Betriebszustand (ZEV HIGH) zu schalten, abhängig von dem Drehmoment, das vom Fahrer abgerufen wird.

11. System gemäß einem der Ansprüche 7 bis 10, bei welchem die Verarbeitungseinheit dazu ausgebildet ist, die Betriebszustände gemäß Steuertabelle Nr. 2 zu aktivieren, wobei die Bezeichnung
- ICE dem ersten Betriebszustand entspricht,
- ZEV LOW dem zweiten Betriebszustand entspricht,
- ZEV HIGH dem dritten Betriebszustand entspricht,
- SERIAL HYBRID dem vierten Betriebszustand entspricht,
- PARALLEL HYBRID LOW dem fünften Betriebszustand entspricht,
- PARALLEL HYBRID HIGH dem sechsten Betriebszustand entspricht,
- GENERATOR dem siebten Betriebszustand entspricht,
- ICE PTO dem achten Betriebszustand entspricht,
- GENERATOR ELECTRIC PTO dem neunten Betriebszustand entspricht,
und wobei
E dem inneren Verbrennungsmotor entspricht,
C dem ersten Elektromotor-Generator entspricht,
D dem zweiten Elektromotor-Generator entspricht,
A der steuerbaren Kupplung entspricht, die den inneren Verbrennungsmotor mit dem ersten Eingang (IN1) des Verteilergetriebes verbindet,
H oder G oder F den ersten oder zweiten oder dritten steuerbaren Kupplungen entsprechen, welche den ersten (S1a) und zweiten Teil (S1b) der ersten (S1) oder zweiten (S2) oder dritten Achse (Se) verbinden,
K eine steuerbare Kupplung zur Aktivierung der Zapfwelle des Fahrzeugs entspricht,
und M einen Motorbetrieb von einem der Elektromotor-Generatoren bezeichnet, G einen Generatorbetrieb von einem der Elektromotor-Generatoren bezeichnet, ON einen Zustand der Aktivierung des Verbrennungsmotors oder einer Verbindung von einer der steuerbaren Kupplungen bezeichnet, und OFF einen Zustand der Deaktivierung des inneren Verbrennungsmotors oder einer Entkupplung von einer der steuerbaren Kupplungen A, H, G, F, K bezeichnet, und ein ON/OFF-Zustand als irrelevant betrachtet werden sollte.

12. System gemäß einem der Ansprüche 9 bis 11, bei welchem der einzige Ausgang des Verteilergetriebes mit einer Fahrzeugantriebsachse verbunden ist und ein Differential der Antriebsachse mit einem Getriebe ausgestattet ist, das zumindest zwei Geschwindigkeitsverhältnisse aufweist und in das gleiche Gehäuse integriert ist wie das Differential.

13. Fahrzeug oder Arbeitsmaschine, ausgestattet mit einer Zapfwelle und umfassend ein Hybridantriebssystem gemäß einem der Ansprüche 1 bis 12.

14. Steuerverfahren für ein Hybridantriebssystem für Fahrzeuge mit einer Zapfwelle gemäß Anspruch 11, umfassend einen Schritt der Steuerung
- des inneren Verbrennungsmotors E,
- des ersten Elektromotor-Generators D und des zweiten Elektromotor-Generators C,
- der steuerbare Kupplungen A, H, G, F, K
gemäß der Steuertabelle Nr. 2.

## Revendications

1. Système de traction hybride pour véhicules équipés d'une prise de force/PTO, le système comprenant :
- un moteur à combustion interne (E) ;
- un premier moteur-générateur électrique (D) et un second moteur-générateur électrique (C), dans lequel au moins ledit premier moteur-générateur électrique comporte un arbre d'entraînement qui comporte des extrémités opposées, toutes deux accessibles, dans lequel l'une desdites extrémités définit une PTO qui peut être activée au moyen d'une liaison de jonction pouvant être commandée afférente (K) ;
- une boîte de transfert (T) qui comprend :
trois entrées pouvant être connectées de façon sélective (IN1, IN2, IN3) et une unique sortie (OUT) qui est destinée à être associée à une transmission/chaîne cinématique de véhicule, dans lequel une première entrée (IN1) est destinée à être associée audit moteur à combustion interne (E) au moyen d'une liaison de jonction pouvant être commandée afférente (A), une deuxième entrée (IN2) est destinée à être associée audit premier moteur-générateur électrique (D) au moyen d'une extrémité libre respective d'un arbre d'entraînement respectif et ladite troisième entrée (IN3) est destinée à être associée audit second moteur-générateur électrique (C) au moyen d'une extrémité libre respective d'un arbre d'entraînement respectif ;
un rapport de transmission fixe entre chacune desdites entrées (IN1, IN2, IN3) et ladite unique sortie (OUT).

2. Système selon la revendication 1, dans lequel ladite boîte de transfert comprend trois axes parallèles (S1, S2, S3) qui définissent les première (IN1), deuxième (IN2) et troisième (IN3) entrées desdites trois entrées pouvant être connectées de façon sélective, et dans lequel chacun desdits trois axes (S1, S2, S3) est formé par des première (Sla, S2a, S3a) et seconde (S1b, S2b, S3b) parties respectivement adjacentes et coaxiales.

3. Système selon la revendication 2, dans lequel ledit premier axe (S1) comprend une première partie (Sla) et une seconde partie (S1b), dans lequel la première partie (Sla) définit ladite première entrée (IN1) et la seconde partie (S1b) définit ladite unique sortie (OUT) de la boîte de transfert (T).

4. Système selon la revendication 3, dans lequel, sur ladite première partie (Sla) du premier axe (S1), une première roue dentée (G1) est cannelée, laquelle engage un pignon (G2) cannelé, à son tour, sur la première partie (S2a) du deuxième axe (S2) desdits trois axes (S1, S2, S3) et dans lequel, sur ladite seconde partie (S1b) du premier axe (S1), une seconde roue dentée (G3) est cannelée, laquelle engage un second pignon (G4) cannelé, à son tour, sur la première partie (S3a) du troisième axe (S3) desdits trois axes (S1, S2, S3).

5. Système selon la revendication 4, dans lequel chaque première partie (Sla, S2a, S3a) desdits premier (S1), deuxième (S2) et troisième (S3) axes est associée à une seconde partie afférente (S1b, S2b, S3b) au moyen de première (H), deuxième (G) et troisième (F) liaisons de jonction pouvant être commandées respectives et/ou dans lequel une seconde partie (S2b, S3b) dudit deuxième (S2) ou troisième (S3) axe est connectée axialement audit arbre d'entraînement dudit premier (D) ou second (C) moteur-générateur électrique ou définit ce dit arbre d'entraînement.

6. Système selon l'une quelconque des revendications qui précèdent, dans lequel ladite boîte de transfert (T) définit deux côtés opposés (Side1, Side2) et dans lequel ladite première entrée (IN1) est accessible depuis un premier côté (Side1) desdits deux côtés opposés et lesdites deuxième et troisième entrées et ladite unique sortie sont accessibles depuis un second côté (Side2) desdits deux côtés opposés.

7. Système selon la revendication 5, comprenant en outre un moyen de traitement qui est configuré de manière à commander ledit moteur à combustion interne (E), lesdits premier (D) et second (C) moteurs-générateurs électriques et lesdites liaisons de jonction pouvant être commandées (A, H, G, F, K) de manière à assurer au moins l'un des modes de fonctionnement qui suivent :
- premier mode de fonctionnement (ICE) : mode dans lequel seulement ledit moteur à combustion interne est actif pour la traction du véhicule, tandis que les moteurs-générateurs électriques (D, C) sont désactivés et que les liaisons de jonction pouvant être commandées respectives (G, F) sont ouvertes (état de désactivation ou coupure/OFF) ;
- deuxième mode de fonctionnement (ZEV LOW) : mode dans lequel seulement ledit second moteur-générateur électrique (C) est actif en tant que moteur pour la traction du véhicule avec un impact environnemental de zéro, tandis que le moteur à combustion interne et l'autre moteur-générateur électrique sont désactivés et que les liaisons de jonction pouvant être commandées respectives (A, H, G) sont ouvertes, de telle sorte que seulement ledit second moteur-générateur électrique (C) soit connecté à la transmission/chaîne cinématique ;
- troisième mode de fonctionnement (ZEV HIGH) : mode dans lequel les deux moteurs-générateurs électriques sont actifs en tant que moteurs pour la traction du véhicule avec un impact environnemental de zéro, tandis que le moteur à combustion interne est désactivé et qu'une liaison de jonction pouvant être commandée afférente (A) est ouverte ;
- quatrième mode de fonctionnement (SERIAL HYBRID) : mode dans lequel ledit second moteur-générateur (C) assure, seul, la traction du véhicule, en fonctionnant en tant que moteur, tandis que ledit premier moteur-générateur (D), qui est guidé par le moteur à combustion interne, fonctionne en tant que générateur, en alimentant en termes de puissance ledit second moteur électrique ;
- cinquième mode de fonctionnement (PARALLEL HYBRID LOW) : mode dans lequel le moteur à combustion interne (E) et seulement l'un (C) des moteurs-générateurs électriques sont connectés à la transmission/chaîne cinématique pour la traction du véhicule, tandis que l'autre moteur-générateur (D) est désactivé ;
- sixième mode de fonctionnement (PARALLEL HYBRID HIGH) : mode dans lequel le moteur à combustion interne (E) et les deux moteurs-générateurs électriques fonctionnent en tant que moteurs et sont connectés à la transmission/chaîne cinématique pour la traction du véhicule ;
- septième mode de fonctionnement (GENERATOR) : mode dans lequel le moteur à combustion interne guide en termes de rotation l'un des moteurs-générateurs électriques (D) de manière à produire de l'énergie électrique, tandis que la ligne de transmission/chaîne cinématique est déconnectée et que l'autre moteur-générateur (C) est désactivé ;
- huitième mode de fonctionnement (ICE PTO) : mode dans lequel la PTO est active pour fermer la liaison de jonction pouvant être commandée afférente (K) et est guidée seulement par le moteur à combustion interne en fermant la liaison de jonction pouvant être commandée afférente et lesdites première (H) et deuxième (G) liaisons de jonction pouvant être commandées, tandis que la transmission/chaîne cinématique peut être soit désactivée, soit activée par ledit second moteur-générateur électrique (C), indépendamment du fonctionnement de la PTO ;
- neuvième mode de fonctionnement (GENERATOR, ELECTRIC PTO) : mode dans lequel la PTO est active et est guidée par le premier moteur électrique afférent (D), tandis que la transmission/chaîne cinématique est actionnée par le moteur à combustion interne et, si nécessaire, le second moteur-générateur électrique est connecté à la transmission/chaîne cinématique de manière à générer du courant électrique.

8. Système selon la revendication 7, dans lequel ladite unité de traitement est configurée de manière à ce qu'elle assure tous les modes de fonctionnement qui ont été mentionnés ci-avant.

9. Système selon l'une quelconque des revendications 7 et 8, dans lequel ladite boîte de transfert (T) est directement connectée au volant d'inertie du moteur à combustion interne (E) et le moteur à combustion interne est actif, puis ladite unité de traitement est configurée de manière à ce qu'elle réalise une commutation depuis ledit quatrième mode de fonctionnement (SERIAL HYBRID) sur ledit cinquième (PARALLEL HYBRID LOW) ou sixième (PARALLEL HYBRID HIGH) mode de fonctionnement lorsqu'un seuil de vitesse prédéfini est excédé.

10. Système selon l'une quelconque des revendications 7 à 9, dans lequel, lorsque ladite boîte de transfert (T) est directement connectée au volant d'inertie du moteur à combustion interne (E) et que le moteur à combustion interne est désactivé, alors ladite unité de traitement est configurée de manière à ce qu'elle réalise une commutation entre ledit deuxième mode de fonctionnement (ZEV LOW) et ledit troisième mode de fonctionnement (ZEV HIGH) en fonction du couple qui est demandé par le conducteur.

11. Système selon l'une quelconque des revendications 7 à 10, dans lequel ladite unité de traitement est configurée de manière à actionner lesdits modes de fonctionnement conformément à la Table de Commande No. 2, table dans laquelle :
- l'étiquette ICE correspond audit premier mode de fonctionnement ;
- l'étiquette ZEV LOW correspond audit deuxième mode de fonctionnement ;
- l'étiquette ZEV HIGH correspond audit troisième mode de fonctionnement ;
- l'étiquette SERIAL HYBRID correspond audit quatrième mode de fonctionnement ;
- l'étiquette PARALLEL HYBRID LOW correspond audit cinquième mode de fonctionnement ;
- l'étiquette PARALLEL HYBRID HIGH correspond audit sixième mode de fonctionnement ;
- l'étiquette GENERATOR correspond audit septième mode de fonctionnement ;
- l'étiquette ICE PTO correspond audit huitième mode de fonctionnement ;
- l'étiquette GENERATOR ELECTRIC PTO correspond audit neuvième mode de fonctionnement ; et dans lequel :
E correspond audit moteur à combustion interne ;
C correspond audit premier moteur-générateur électrique ;
D correspond audit second moteur-générateur électrique ;
A correspond à ladite liaison de jonction pouvant être commandée qui connecte ledit moteur à combustion interne à ladite première entrée (IN1) de la boîte de transfert ;
H ou G ou F correspond à ladite première ou deuxième ou troisième liaison de jonction pouvant être commandée qui connecte lesdites première (Sla) et seconde (S1b) parties dudit premier (S1) ou deuxième (S2) ou troisième (S3) axe ;
K correspond à une liaison de jonction pouvant être commandée pour activer ladite PTO du véhicule ; et
dans lequel :
M indique un fonctionnement en moteur de l'un desdits moteurs-générateurs électriques, G indique un fonctionnement en générateur de l'un desdits moteurs-générateurs électriques, ON/MARCHE correspond à un état d'activation dudit moteur à combustion interne ou à un état de connexion de l'une desdites liaisons de jonction pouvant être commandées et OFF/COUPURE ou ARRET correspond à un état de désactivation dudit moteur à combustion interne ou à un état de déconnexion de l'une desdites liaisons de jonction pouvant être commandées A, H, G, F, K et dans lequel une condition ON/OFF-MARCHE/ARRET devrait être considérée comme étant non pertinente.

12. Système selon l'une quelconque des revendications 9 à 11, dans lequel ladite unique sortie de la boîte de transfert est connectée à un axe d'entraînement du véhicule, et dans lequel un différentiel dudit axe d'entraînement est équipé d'un engrenage qui présente au moins deux rapports de transmission/vitesse, en intégration dans le même carter que le différentiel.

13. Véhicule ou engin de chantier équipé d'une PTO et comprenant un système de traction hybride selon l'une quelconque des revendications 1 à 12.

14. Procédé de commande pour un système de traction hybride pour des véhicules équipés d'une PTO selon la revendication 11, comprenant une étape de commande :
- dudit moteur à combustion interne E ;
- dudit premier moteur-générateur électrique D et dudit second moteur-générateur électrique C ;
- desdites liaisons de jonction pouvant être commandées A, H, G, F, K
conformément à la Table de Commande No. 2.
